# EUROPEAN PATENT APPLICATION

(11) **EP 2 410 610 A1**
(43) Date of publication of application: **25.01.2012**
(21) Application number: 11163849.0
(22) Date of filing: 27.04.2011
(51) Int. Cl.: H01Q 11/08, H01Q 19/28, H01Q 1/22

(54) **Antenna device and communication device**

(30) Priority: 20.07.2010 JP 2010163215
(71) Applicant: Fujitsu Limited, Kawasaki-shi, Kanagawa 211-8588 (JP)
(72) Inventor: Ishikawa, Shohei, Kanagawa 211-8588 (JP); Ninomiya, Teruhisa, Kanagawa 211-8588 (JP)
(74) Representative: HOFFMANN EITLE

(57) **Abstract**

An antenna device (100) includes a helical antenna (111) that radiates a circularly polarized radio wave in a direction of an axis S, in which the helical antenna is formed with linear conducting bodies (111a to 111d) each helically winding around the predetermined axis and adjacent linear conducting bodies (111a to 111d) are spaced a distance P apart. The antenna device (100) further includes a director (112) that is on the axis S, along which a radio wave is radiated from the helical antenna (111), at a position a distance X away from the helical antenna (111), the distance X being substantially equal to the distance P.

## Description

### FIELD

The embodiment discussed herein is directed to an antenna device and a communication device.

### BACKGROUND

Radio frequency identification (RFID), which is a contactless identification technology, has been used more and more, recently. The RFID technology enables data transfer between a communication device, such as a reader/writer, and a target recording medium for identification, such as an integrated circuit (IC) tag, using radio wave.

An antenna device is included in an RFID communication device and the antenna device is, for example, a circular polarized antenna that radiates a circularly polarized wave. A typical circular polarized antenna is, for example, a helical antenna. A helical antenna is an antenna formed with a linear conducting body helically winding around an axis and radiates a circularly polarized radio wave in a direction of the axis that is at the center of the spiral.

The directivity of a stand-alone helical antenna is low. When a helical antenna with a low directivity targets a certain IC tag for identification, another IC tag near the target IC tag may accidentally be in a coverage area of a radio wave radiated from the helical antenna.

A well-known antenna device that increases the antenna directivity further includes a director in a direction of a radio wave radiated from a helical antenna. By the director in a direction of a radio wave radiated from the helical antenna, the antenna device increases the antenna directivity.

However, a conventional antenna device that has a direction in a radio wave radiated from a helical antenna is too large.

Accordingly, it is an object in one aspect of an embodiment of the invention to provide a small antenna device but having a sufficiently high directivity and a small communication device but having a sufficiently high directivity.
Patent Document 1: Japanese Laid-open Patent Publication No. 2008-123231
Patent Document 2: Japanese Laid-open Patent Publication No. 04-216204

### SUMMARY

According to an aspect of an embodiment of the invention, an antenna device includes an antenna that radiates a circularly polarized radio wave in a direction of a predetermined axis, wherein the antenna is formed with linear conducting bodies each helically winding around the predetermined axis, and adjacent linear conducting bodies are spaced a first distance apart; and a director that is on the axis, along which a radio wave is radiated from the antenna, at a position a second distance away from the antenna, wherein the second distance is substantially equal to the first distance.

### BRIEF DESCRIPTION OF DRAWINGS

FIG. 1 is a block diagram of a reader/writer that includes an antenna device according to an embodiment;
FIG. 2 is a perspective view of the antenna device according to the present embodiment;
FIG. 3 is a side view of the antenna device illustrated in FIG. 2;
FIG. 4 is an external view of an example of the dielectric body when λ = 220 mm;
FIG. 5 is a schematic diagram that illustrates how a radio wave is radiated from a stand-alone helical antenna;
FIG. 6 is a schematic diagram that illustrates how a radio wave is radiated from the antenna device according to the present embodiment;
FIG. 7 is a graph of the relation between a distance X and a distance Y and a front-back ratio where distance P = 0.125λ;
FIG. 8 is a graph of the relation between the distance X and the distance Y and a half-width where the distance P = 0.125λ;
FIG. 9 is a graph of the relation between the distance X and the distance Y and a gain where the distance P = 0.125λ;
FIG. 10 is a graph of the relation between the distance X and the distance Y and the front-back ratio where distance P = 0.114λ;
FIG. 11 is a graph of the relation between the distance X and the distance Y and the half-width where the distance P = 0.114λ;
FIG. 12 is a graph of the relation between the distance X and the distance Y and the gain where the distance P = 0.114λ;
FIG. 13 is an external view of an example of the conductive element;
FIG. 14 is a graph of change in the front-back ratio depending on the number of the conductive elements;
FIG. 15 is a perspective view of a first modification of the conductive elements;
FIG. 16 is a perspective view of a second modification of the conductive elements; and
FIG. 17 is a perspective view of a third modification of the conductive elements.

### DESCRIPTION OF EMBODIMENT

A preferred embodiment of the present invention will be explained with reference to accompanying drawings. The antenna device disclosed herein is included in an RFID communication device or a reader/writer. It is noted that the antenna device and the communication device of the present invention is not limited to the following embodiment.

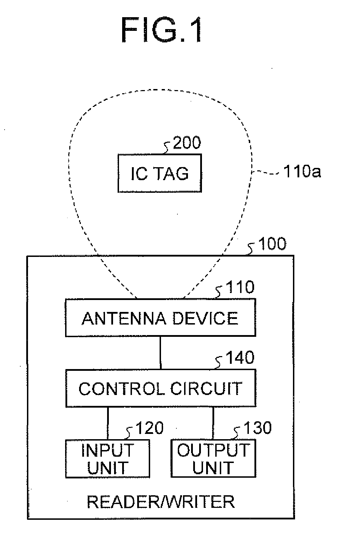

A reader/writer that includes an antenna device according to an embodiment is described below. FIG. 1 is a block diagram of a reader/writer 100 according to the embodiment. In the example illustrated in FIG. 1, there is an IC tag 200 near the reader/writer 100. A broken line 110a of FIG. 1 indicates a radio-wave coverage area. As illustrated in FIG. 1, the reader/writer 100 includes an antenna device 110, an input unit 120, an output unit 130, and a control circuit 140.

The antenna device 110 is included in or mounted on the reader/writer 100. The antenna device 110 radiates a radio wave using a power supplied from the control circuit 140. The antenna device 110 receives a radio wave coming and outputs the received radio wave to the control circuit 140. The configuration of the antenna device 110 will be described in detail later.

The input unit 120 is an input unit that is used to input various information. The input unit 120 is, for example, an operation button to switch on a communication function of the reader/writer 100. The output unit 130 is an output unit that outputs various pieces of information. The output unit 130 is, for example, a liquid crystal display and a speaker that output a communication result made by the reader/writer 100.

The control circuit 140 controls the reader/writer 100. The control circuit 140 supplies a power to the antenna device 110. The control circuit 140 makes a communication with a recording medium or the IC tag 200 using a radio wave radiated from the antenna device 110. For example, the control circuit 140 writes data to the IC tag 200 using a radio wave radiated from the antenna device 110 and reads data from the IC tag 200 using a radio wave coming.

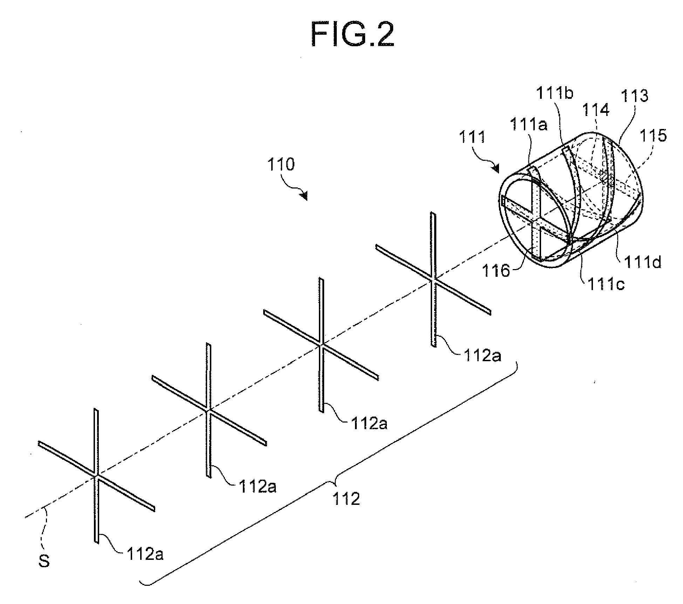

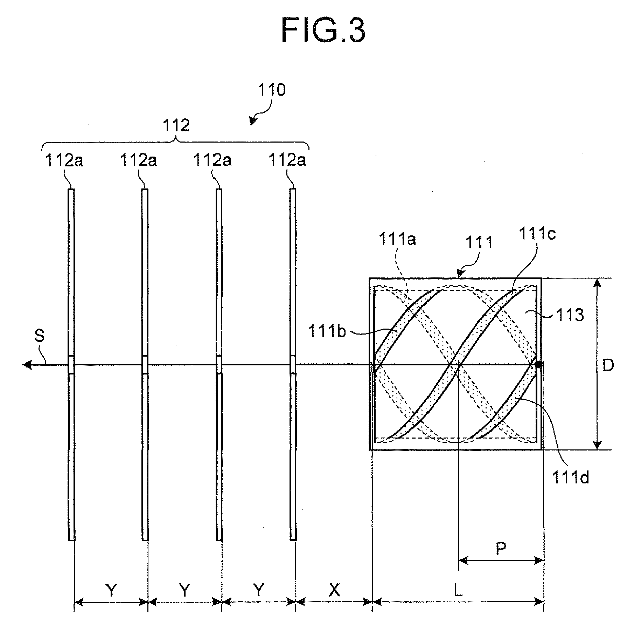

The configuration of the antenna device 110 illustrated in FIG. 1 is described below with reference to FIGS. 2 and 3. FIG. 2 is a perspective view of the antenna device 110 according to the present embodiment. FIG. 3 is a side view of the antenna device 110 illustrated in FIG. 2. As illustrated in FIGS. 2 and 3, the antenna device 110 includes a helical antenna 111 and a director 112. Although, in the example illustrated in FIGS. 2 and 3, the director 112 includes four conductive elements 112a, the number of the conductive elements 112a can be less than or more than four. The helical antenna 111 and the director 112 are fixed on a casing (not illustrated).

The helical antenna 111 is a circular polarized antenna that radiates a circularly polarized radio wave. The helical antenna 111 used in the present embodiment is a four-line helical antenna that is formed with four linear conducting bodies 111a to 111d each helically winding around a central axis S of a cylindrical dielectric body 113 on a circumference of the cylindrical dielectric body 113 spaced a distance P apart. The helical antenna 111 radiates a circularly polarized radio wave in the direction of the central axis S of the cylindrical dielectric body 113.

One end of each of the linear conducting bodies 111a to 111d is connected to a cross-shaped power-supply conducting body 115. The power-supply conducting body 115 has a power-supply point 114 that receives a power from the control circuit 140 at the center thereof. The other end of each of the linear conducting bodies 111a to 111d is connected to a cross-shaped radiation conducting body 116 that radiates a circularly polarized radio wave in accordance with a power received at the power-supply point 114 from the control circuit 140.

The distance P among the linear conducting bodies 111a to 111d of the helical antenna 111 is a value not higher than 0.15λ but not lower than 0.11λ, where λ is the equivalent wavelength of a current circularly polarized radio wave and, more particularly, the distance P is a value close to, for example, 0.125λ. The equivalent wavelength λ is expressed by λ = λ0 / (√εeff), where λ0 is the wavelength of a current circularly polarized radio wave in vacuum and εeff is the effective dielectric constant of the dielectric body 113 with respect to the helical antenna 111.

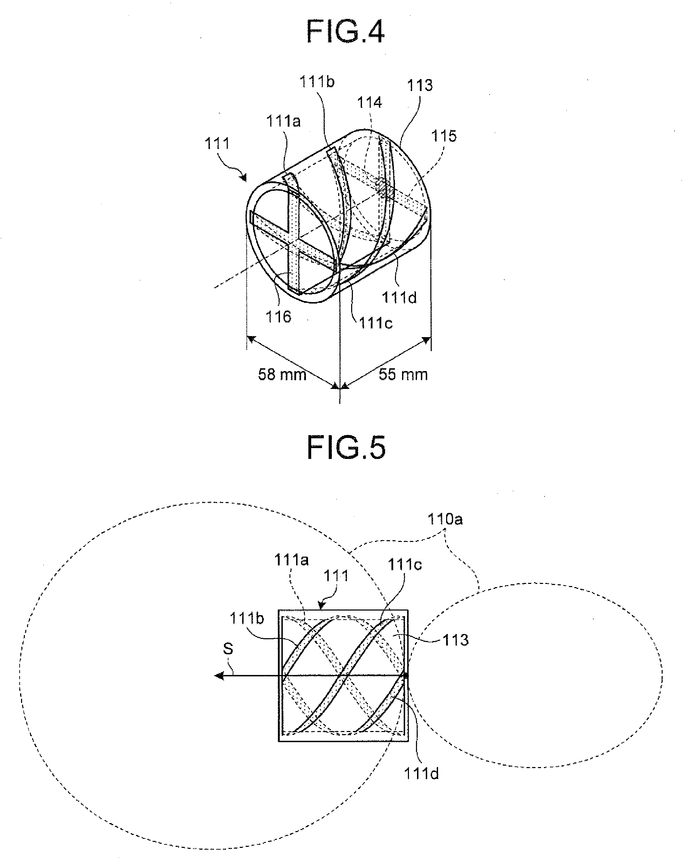

An entire length L and a diameter D of the cylindrical dielectric body 113 attached with the helically winding linear conducting bodies 111a to 111d are about 0.25λ. FIG. 4 is an external view of an example of the dielectric body 113 when λ = 220 µm. As illustrated in FIG. 4, when λ = 220 mm, the entire length L of the cylindrical dielectric body 113 is 55 mm and the diameter D is 58 mm. That is, the entire length L and the diameter D of the cylindrical dielectric body 113 are about 0.25λ.

A manner of setting the distance P, the entire length L, and the diameter D of the linear conducting bodies 111a to 111d is described in J.D.Kraus, R.J.Marhefka "Antennas" 3rd Ed., Chapter 8, pp. 292, McGRAW-HILL; therefore, the manner is not described in details herein.

The director 112 is on the central axis S of the dielectric body 113, from which a radio wave is radiated from the helical antenna 111, at a position a distance X away from the helical antenna 111. The director 112 includes the four conductive elements 112a aligned on the central axis S of the dielectric body 113. Arrangement of the conductive elements 112a is described with reference to an example illustrated in FIG. 3.

As illustrated in FIG. 3, the four conductive elements 112a are on the central axis S of the cylindrical dielectric body 113 within an area on the radiation conducting body 116 side of the helical antenna 111. One conductive element 112a that is closest to the helical antenna 111 among the four conductive elements 112a is at a position the distance X away from the helical antenna 111. The adjacent conductive elements 112a are spaced a distance Y apart.

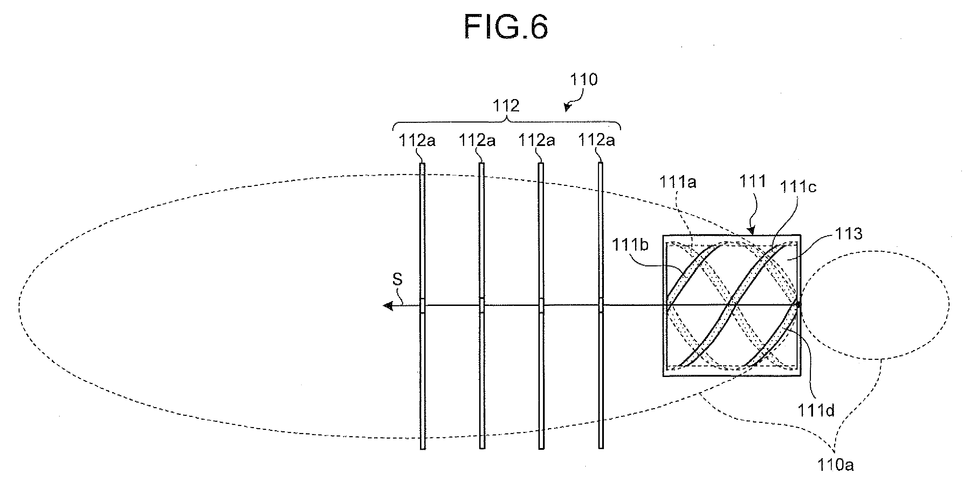

The reason why the director 112 is aligned on the central axis S of the dielectric body 113 along which a radio wave is radiated from the helical antenna 111 is described below. FIG. 5 is a schematic diagram that illustrates how a radio wave is radiated from the stand-alone helical antenna 111. FIG. 6 is a schematic diagram that illustrates how a radio wave is radiated from the antenna device 110 according to the present embodiment. The broken lines 110a of FIGS. 5 and 6 indicate the radio-wave coverage areas.

As illustrated in FIG. 5, if no director 112 is present on the central axis S along which a radio wave is radiated from the helical antenna 111, i.e., the helical antenna 111 is a stand-alone device, the coverage area of the radio wave coming from the helical antenna 111 is relatively wide. In other words, if the helical antenna 111 is a stand-alone device, the antenna directivity is low. In this case, there is a high possibility that a wrong IC tag near the target IC tag 200 for identification is within the coverage area of the radio wave radiated from the helical antenna 111.

In contrast, as illustrated in FIG. 6, if the director 112 is on the central axis S along which a radio wave is radiated from the helical antenna 111, the director 112 guides the radio wave radiated from the helical antenna 111 in a direction from the helical antenna 111 to the director 112. In other words, the director 112 works as a radio-wave guide. The director 112 narrows the coverage area of the radio wave coming from the helical antenna 111 as it is compared with the situation illustrated in FIG. 5. Moreover, the director 112 extends the coverage area of the radio wave coming from the helical antenna 111 along the central axis S of the dielectric body 113 in the direction from the helical antenna 111 to the director 112. As a result, the directivity of the antenna device 110 increases in the direction from the helical antenna 111 to the director 112.

As described above, the reason why the director 112 is arranged on the central axis S along which a radio wave is radiated from the helical antenna 111 is to increase the directivity of the antenna device 110 in the direction from the helical antenna 111 to the director 112. With this configuration, even if there is another IC tag near the target IC tag 200 for identification, any IC tag other than the target IC tag 200 is likely to keep out of the coverage area of the radio wave coming from the helical antenna 111.

Moreover, in the present embodiment, the distance X between the helical antenna 111 and the conductive element 112a that is closest to the helical antenna 111 and the distance Y between the adjacent conductive elements 112a are substantially equal to the distance P among the linear conducting bodies 111a to 111d. That is, the distance X between the helical antenna 111 and the conductive element 112a that is closest to the helical antenna 111 and the distance Y between the adjacent conductive elements 112a are values not higher than 0.15λ but not lower than 0.11λ. The distance X and the distance Y are, preferably, values not higher than 0.13λ but not lower than 0.12λ. The distance X and the distance Y are, more preferably, 0.125λ.

The reason why the distance X and the distance Y are set to values substantially equal to the distance P among the linear conducting bodies 111a to 111d or values not higher than 0.15λ but not lower than 0.11λ is described below. Some antennas called Yagi-Uda antennas have a dipole antenna and a director apart a distance about 0.25λ from each other. When Yagi-Uda antennas are taken into consideration, it may be said that the distance X and the distance Y of the present embodiment are preferably about 0.25λ. In a Yagi-Uda antenna, the distance between the dipole antenna and the director is set to a value about 0.257λ in order to increase the front-back ratio. The front-back ratio is a ratio between an electric field of a radio wave radiated in a direction from the antenna to the director and an electric field of a radio wave radiated in a direction 180° opposite to the direction. As the front-back ratio increases, the directivity of the antenna device increases in the direction from the antenna to the director. A typical handy reader/writer that includes a helical antenna inside its casing has a low directivity and may read not only a target tag but also a wrong tag near the target tag. The technique used in the present device is not a technique for modifying a reader/writer and is different from the technique used in a Yagi antenna in which an external director is at a position a quarter wavelength away from an antenna. The present antenna device is characterized in an external director present at a position a certain distance away from a helical antenna that is included in the present reader/writer, in which the certain distance is equal to a distance between conductive elements of the helical antenna.

If the distance X and the distance Y are about 0.25λ and the equivalent wavelength λ of the current radio wave is relatively high, the antenna device 110 becomes large and it is difficult to mount the large antenna device 110 on the reader/writer 100. If the current radio wave is a typical radio wave used in RFID, for example, an about-950-MHz UHF radio wave, the distance X and the distance Y become 7.89 cm and it is difficult to mount the large antenna device 110 on the handy and small reader/writer 100.

As these facts are taken into consideration, the inventors studied a way of increasing, keeping the distance X and the distance Y lower than 0.25λ, the front-back ratio to a high level equal to the front-back ratio corresponding to the distance X and the distance Y being 0.25λ. Consequently, the inventors found that, if the distance X and the distance Y are substantially equal to the distance P among the linear conducting bodies 111a to 111d, i.e., values not higher than 0.15λ but not lower than 0.112λ, the front-back ratio is increased to a level higher than the front-back ratio corresponding to the distance X and the distance Y being about 0.25λ.

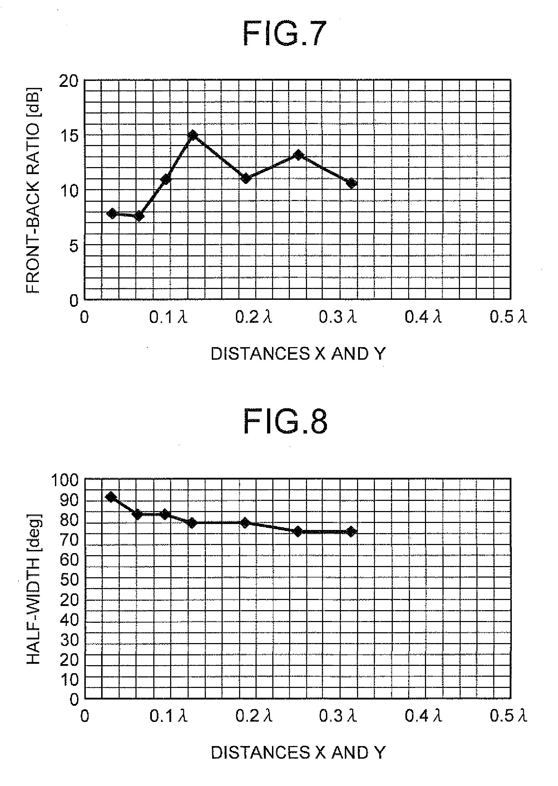

The above finding is described below with reference to examples illustrated in FIGS. 7 to 12. FIG. 7 is a graph of the relation between the distance X and the distance Y and the front-back ratio where the distance P = 0.125λ. The horizontal axis of the graph of FIG. 7 is the distance X and the distance Y; the vertical axis of the graph of FIG. 7 is the front-back ratio [dB]. The effective dielectric constant εeff of the dielectric body 113 with respect to the helical antenna 111 is, herein, "1"; and the equivalent wavelength λ, is equal to the wavelength λ0 of the current radio wave in vacuum. As illustrated in FIG. 7, if the distance X and the distance Y are 0.25λ, the front-back ratio is 13.16 [dB]. As the distance X and the distance Y decrease from 0.25λ, the front-back ratio decreases from 13.16 [dB], once. However, if the distance X and the distance Y are substantially equal to the distance P, i.e., values not higher than 0.15λ but not lower than 0.11λ, the front-back ratio is higher than the front-back ratio 13.16 [dB] that is the level corresponding to the distance X and the distance Y being 0.25λ. The front-back ratio marks the highest value 15 [dB] when the distance X and the distance Y are equal to the distance P, i.e., 0.125λ.

FIG. 8 is a graph of the relation between the distance X and the distance Y and the half-width where the distance P = 0.125λ. The horizontal axis of the graph of FIG. 8 is the distance X and the distance Y; the vertical axis of the graph of FIG. 8 is the half-width [deg]. The half-width is an angular width at which the power of the radio wave radiated from the antenna is a half maximum. As illustrated in FIG. 8, if the distance X and the distance Y are substantially equal to the distance P, i.e., values not higher than 0.15λ but not lower than 0.11λ, the half-width is substantially equal to the half-width corresponding to the distance X and the distance Y being 0.25λ.

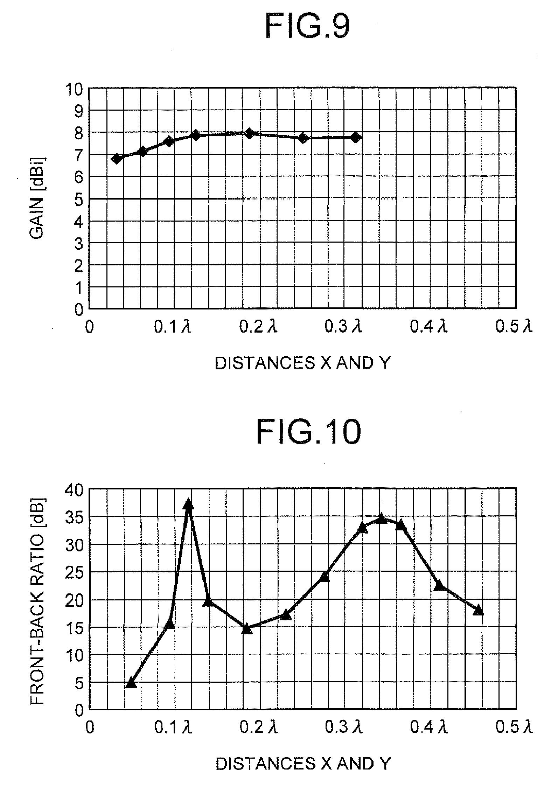

FIG. 9 is a graph of the relation between the distance X and the distance Y and the gain where the distance P = 0.125λ. The horizontal axis of the graph of FIG. 9 is the distance X and the distance Y; the vertical axis of the graph of FIG. 9 is the gain [dBi]. The gain is a ratio between the power of an antenna to be measured and the power of the reference antenna, the powers being measured when the same power is supplied to the antennas. As illustrated in FIG. 9, the distance X and the distance Y are substantially equal to the distance P, i.e., values not higher than 0.15λ but not lower than 0.11λ, the gain is substantially equal to the gain corresponding to the distance X and the distance Y being 0.25λ.

FIG. 10 is a graph of the relation between the distance X and the distance Y and the front-back ratio where the distance P = 0.114λ. The horizontal axis of the graph of FIG. 10 is the distance X and the distance Y; the vertical axis of the graph of FIG. 10 is the front-back ratio [dB]. The effective dielectric constant εeff of the dielectric body 113 with respect to the helical antenna 111 is, herein, a predetermined value; and the equivalent wavelength λ is shorter than the wavelength λ0 of the current radio wave in vacuum. As illustrated in FIG. 10, if the distance X and the distance Y are 0.34λ, the front-back ratio is 34.7 [dB]. As the distance X and the distance Y decrease from 0.34λ, the front-back ratio decreases from 34.7 [dB], once. However, if the distance X and the distance Y are substantially equal to the distance P, i.e., are values not higher than 0.15λ but not lower than 0.11λ, the front-back ratio is higher than the front-back ratio 34.7 [dB] that is the level corresponding to the distance X and the distance Y being 0.34λ. The front-back ratio marks the highest value 38 [dB] when the distance X and the distance Y are equal to the distance P, i.e., 0.114λ.

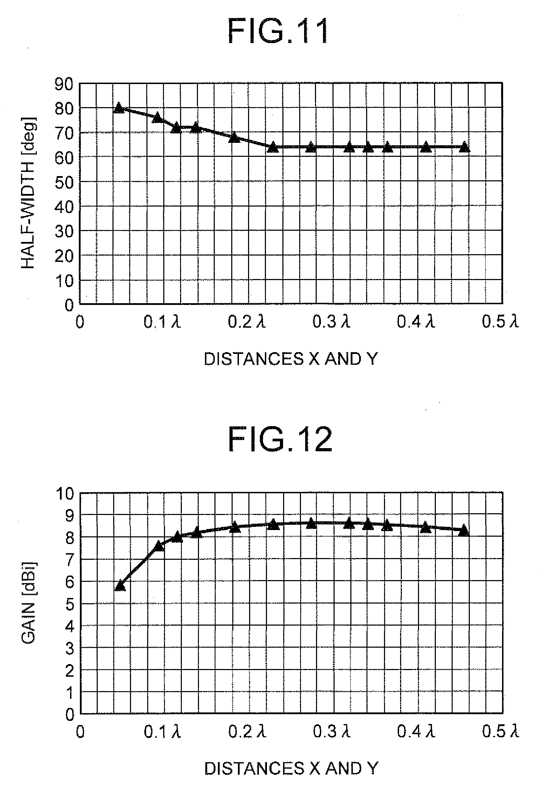

FIG. 11 is a graph of the relation between the distance X and the distance Y and the half-width where the distance P = 0.114λ. The horizontal axis of the graph of FIG. 11 is the distance X and the distance Y; the vertical axis of the graph of FIG. 11 is the half-width [deg]. As illustrated in FIG. 11, if the distance X and the distance Y are substantially equal to the distance P, i.e., values not higher than 0.15λ but not lower than 0.11λ, the half-width is substantially equal to the half-width corresponding to the distance X and the distance Y being 0.34λ.

FIG. 12 is a graph of the relation between the distance X and the distance Y and the gain where the distance P = 0.114λ. The horizontal axis of the graph of FIG. 12 is the distance X and the distance Y; the vertical axis of the graph of FIG. 12 is the gain [dBi]. As illustrated in FIG. 12, the distance X and the distance Y are substantially equal to the distance P, i.e., values not higher than 0.15λ but not lower than 0.11λ, the gain is substantially equal to the gain corresponding to the distance X and the distance Y being 0.34λ.

As described above, if the distance X and the distance Y are substantially equal to the distance P among the linear conducting bodies 111a to 111d, i.e., values not higher than 0.15λ but not lower than 0.11λ, the front-back ratio is higher than the front-back ratio corresponding to the distance X and the distance Y being about 0.25λ. At the same time, the half-width and the gain are substantially equal to the half-width and the gain each corresponding to the distance X and the distance Y being about 0.25λ, respectively. Therefore, in the antenna device 110 according to the present embodiment, the distance X and the distance Y are set to values substantially equal to the distance P among the linear conducting bodies 111a to 111d, i.e., values not higher than 0.15λ but not lower than 0.11λ. With this configuration, compared with a Yagi-Uda antenna in which the distance between the antenna and the director is about 0.25λ, the antenna device 110 according to the present embodiment has an increased antenna directivity with a decreased volume.

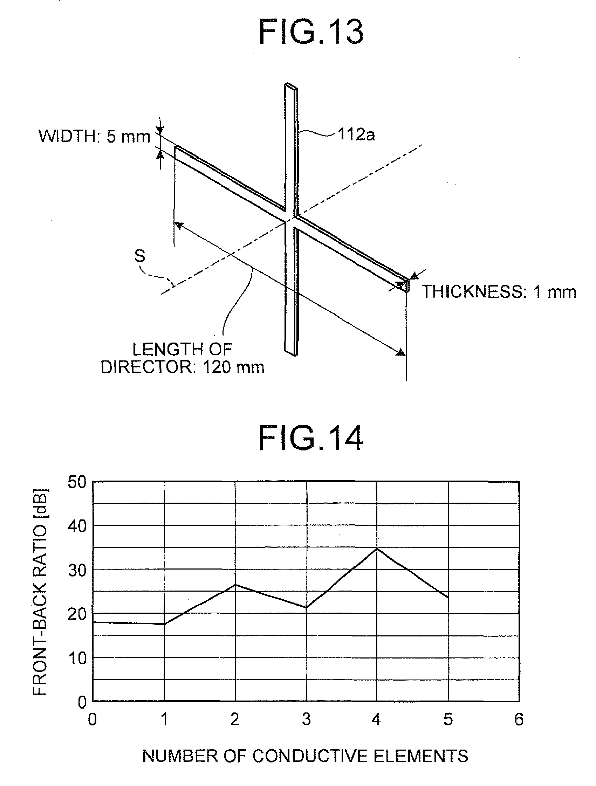

Moreover, in the present embodiment, the four conductive elements 112a are in a cross shape, viewed from a plane perpendicular to the central axis S of the dielectric body 113. FIG. 13 is an external view of an example of the conductive element 112a. As illustrated in FIG. 13, the 1-mm-thick conductive element 112a is in a cross shape with the length 120 mm and the width 5 mm, viewed from a plane perpendicular to the central axis S of the dielectric body 113.

As described above, in the present embodiment, the four conductive elements 112a are in a cross shape, viewed from a plane perpendicular to the central axis S of the dielectric body 113, which increases the sensitivity of a radio wave with respect to a plate perpendicular to the central axis S of the dielectric body 113.

As, in the present embodiment, the director 112 includes the four conductive elements 112a, the number of the conductive elements 112a is, preferably, an even number. The reason is described with reference to FIG. 14.

FIG. 14 is a graph of change in the front-back ratio depending on the number of the conductive elements 112a. The horizontal axis of the graph of FIG. 14 is the number of the conductive elements 112a; the vertical axis of the graph of FIG. 14 is the front-back ratio [dB]. As illustrated in FIG. 14, a front-back ratio corresponding to an even number of the conductive elements 112a is higher than a front-back ratio corresponding to an odd number of the conductive elements 112a. For example, the front-back ratio corresponding to two conductive elements 112a is higher than the front-back ratios corresponding to one or three conductive elements 112a.

As described above, if the number of the conductive elements 112a is an even number, as compared with the number being an odd number, a higher front-back ratio is obtained. Therefore, in the antenna device 110 according to the present embodiment, the director 112 includes the four conductive elements 112a.

As described above, the antenna device 110 according to the present embodiment includes the helical antenna 111 that is formed with the four linear conducting bodies 111a to 111d each helically winding around the central axis S of the dielectric body 113 spaced the distance P apart. The helical antenna 111 radiates a circularly polarized radio wave in the direction of the central axis S. The antenna device 110 further includes the director 112 on the central axis S, along which a radio wave is radiated from the helical antenna 111, at a position the distance X away from the helical antenna 111, the distance X being substantially equal to the distance P. With this configuration, the antenna device 110 can increase the antenna directivity to a sufficiently high level in a direction from the helical antenna 111 to the director 112. The antenna device 110 can especially increase the front-back ratio that is a major index of the antenna directivity.

Moreover, in the antenna device 110 according to the present embodiment, the director 112 includes the two or more conductive elements 112a, each located on the central axis S along which a radio wave is radiated from the helical antenna 111. The distance X, which is the distance between the helical antenna 111 and the conductive element 112a that is closest to the helical antenna 111, and the distance Y, which is the distance between the adjacent conductive elements 112a, are substantially equal to the distance P among the linear conducting bodies 111a to 111d. With this configuration, compared with a director including one conductive element, the antenna device 110 has an increased antenna directivity.

Furthermore, in the antenna device 110 according to the present embodiment, the distance X and the distance Y are substantially equal to the distance P among the linear conducting bodies 111a to 111d, i.e., values not higher than 0.15λ but not lower than 0.11λ. With this configuration, compared with a Yagi-Uda antenna in which the distance between the antenna and the director is about 0.25λ, the antenna device 110 has an increased antenna directivity with a decreased volume.

Moreover, in the antenna device 110 according to the present embodiment, the number of the conductive elements 112a is an even number. With this configuration, compared with a case where the number of the conductive elements 112a is an odd number, the front-back ratio is increased to a higher level and the antenna device 110 has an increased antenna directivity.

Furthermore, in the antenna device 110 according to the present embodiment, the four conductive elements 112a are in a cross shape, viewed from a plane perpendicular to the central axis S along which a radio wave is radiated from the helical antenna 111. With this configuration, the antenna device 110 can transmit/receive a circularly polarized radio wave at a high sensitivity.

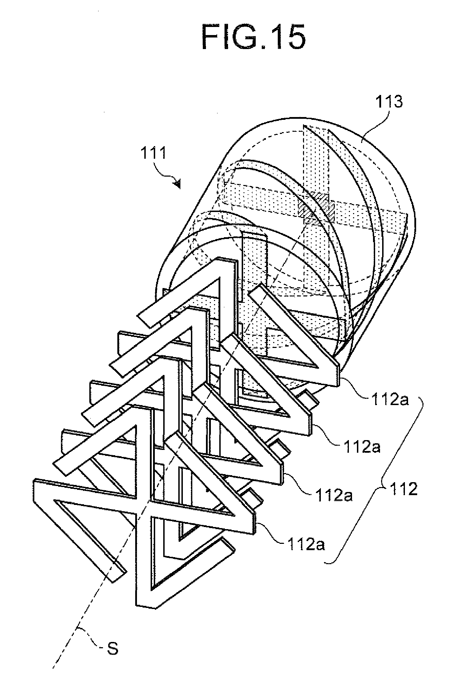

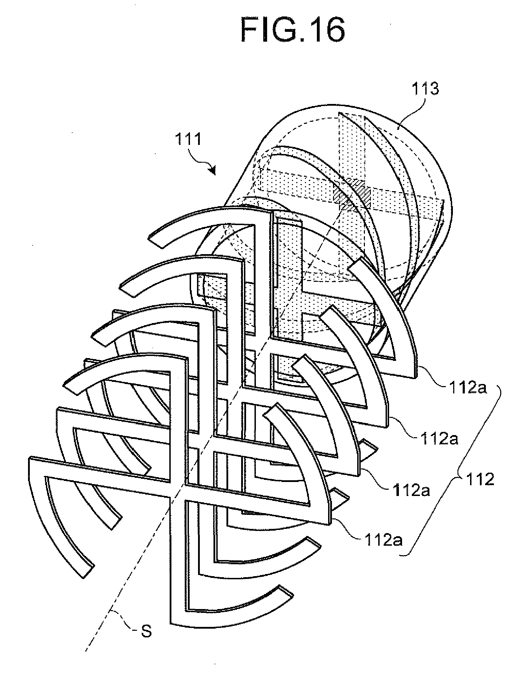

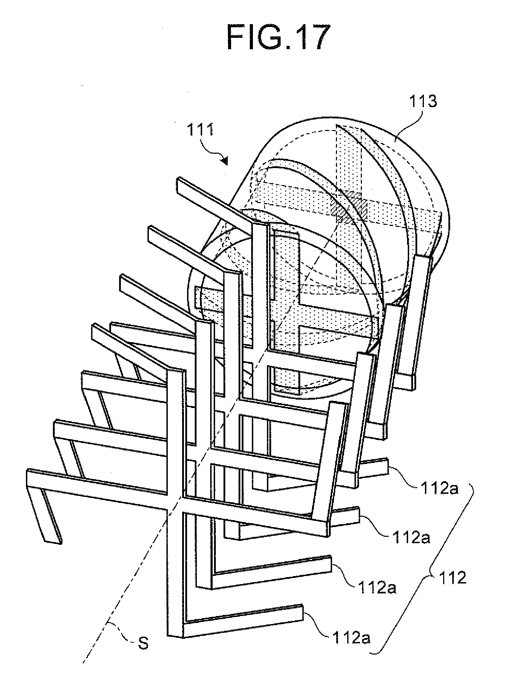

Although, in the present embodiment, the four conductive elements 112a are in a cross shape, viewed from a plane perpendicular to the central axis S along which a radio wave is radiated from the helical antenna 111, the shape of the conductive elements 112a is not limited thereto. A first modification, a second modification, and a third modification of the shape of the conductive elements 112a are described below. FIGS. 15 to 17 are perspective views of a first modification, a second modification, and a third modification of the conductive elements 112a. As illustrated in FIGS. 15 to 17, the four conductive elements 112a can be in a hooked cross shape, viewed from a plane perpendicular to the central axis S from the helical antenna 111. When they are compared with the cross-shaped conductive elements, the hooked-cross-shaped conductive elements 112a reduces the outline of the director 112, keeping the length of the conductive elements unchanged. With this configuration, an antenna device having a decreased volume can transmit/receive a circularly polarized radio wave at a sensitivity as high as that of the antenna device having cross-shaped conductive elements.

Although, in the present embodiment, the antenna device includes, as an example of the circular polarized antenna, the four-line helical antenna 111 having the four linear conducting bodies 111a to 111d helically winding on the circumference of the cylindrical dielectric body 113, the configuration is not limited thereto. For example, it is allowable to use another circular polarized antenna, such as a cross dipole antenna, instead of the helical antenna 111. Moreover, a two-line helical antenna and a single-line helical antenna can be used instead of the four-line helical antenna 111.

According to an aspect of an antenna device of the present invention, the antenna directivity is increased to a sufficiently high level.

## Claims

1. An antenna device (100) comprising:
an antenna (111) that radiates a circularly polarized radio wave in a direction of a predetermined axis, wherein the antenna (111) is formed with linear conducting bodies (111a to 111d) each helically winding around the predetermined axis, and adjacent linear conducting bodies (111a to 111d) are spaced a first distance apart; and
a director (112) that is on the axis, along which a radio wave is radiated from the antenna (111), at a position a second distance away from the antenna (111), wherein the second distance is substantially equal to the first distance.

2. The antenna device (100) according to claim 1, wherein
the director (112) includes a plurality of conductive elements (112a), each conductive element (112a) being on the axis along which a radio wave is radiated from the antenna (111), and
a distance between the antenna (111) and a conductive element (112a) closest to the antenna (111) and a distance between adjacent conductive elements (112a) are substantially equal to the second distance.

3. The antenna device (100) according to claim 1 or 2, wherein the first distance and the second distance are values not higher than 0.15λ but not lower than 0.11λ, where λ is an equivalent wavelength of a radio wave radiated from the antenna (111).

4. The antenna device (100) according to claim 2 or 3, wherein the number of the conductive elements (112a) is an even number.

5. The antenna device (100) according to any one of claims 2 to 4, wherein the conductive elements (112a) are in a cross shape, viewed from a plate perpendicular to the axis along which a radio wave is radiated from the antenna (111).

6. The antenna device (100) according to any one of claims 2 to 4, wherein the conductive elements (112a) are in a hooked cross shape, viewed from a plate perpendicular to the axis along which a radio wave is radiated from the antenna (111).

7. A communication device for radiating a radio wave toward a tag (200) to make a communication with the tag (200), the communication device comprising an antenna device according to any one of the preceding claims.
